# EUROPÄISCHE PATENTSCHRIFT

(11) **EP 1 396 524 B1**
(45) Veröffentlichungstag und Bekanntmachung des Hinweises auf die Patenterteilung: **20.07.2005**
(21) Anmeldenummer: 03018723.1
(22) Anmeldetag: 26.08.2003
(51) Int. Cl.: C08K 9/04, C08K 5/5313

(54) **Oberflächenmodifizierte Phosphinsäuresalze**
Surface modified phosphinic acid salts
Sels d'acide phosphinique a surface modifièe

(30) Priorität: 06.09.2002 DE 10241373
(43) Veröffentlichungstag der Anmeldung: 10.03.2004
(73) Patentinhaber: Clariant GmbH, 65929 Frankfurt am Main (DE)
(72) Erfinder: Hörold, Sebastian, Dr., 86420 Diedorf (DE); Heinrichs, Franz-Leo, Dr., 86456 Gablingen (DE); Jung, Elisabeth, 50181 Bedburg (DE)
(74) Vertreter: Paczkowski, Marcus, Dr.

(56) Entgegenhaltungen:
- EP-A- 0 298 375
- EP-A- 0 576 833

## Beschreibung

Die Erfindung betrifft oberflächenmodifizierte Phosphinsäuresalze, ein Verfahren zu Ihrer Herstellung und ihre Anwendung als Flammschutzmittel für thermoplastische und duroplastische Polymere.

Für thermoplastische Polymere haben sich die Salze von Phosphinsäuren (Phosphinate) als wirksame flammhemmende Zusätze erwiesen, dies gilt sowohl für die Alkalimetallsalze (DE-A-2 252 258) als auch für die Salze anderer Metalle (DE-A-2 447 727).

Calcium- und Aluminiumphosphinate sind in Polyestern als besonders wirksam beschrieben worden und beeinträchtigen die Materialeigenschaften der Polymerformmassen weniger als die Alkalimetallsalze (EP-A-0 699 708).

Darüber hinaus wurden synergistische Kombinationen von den genannten Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Durch den Zusatz von phosphororganischen Flammschutzmitteln kann es zu unerwünschten Beeinträchtigungen des Polymers kommen. In thermoplastischen Polyestern kann es beispielsweise zu Abbau der Polymerketten durch sauer katalysierte Esterspaltung kommen. In der DE 199 20 276 wird die Verwendung von Carbodiimiden in Zusammenhang mit phosphororganischen Flammschutzmitteln beschrieben. Nachteilig ist der hohe Preis von Carbodiimid-Stabilisatoren. Darüber hinaus kann es zu Verfärbungen der Polymeren kommen, insbesondere bei sehr hohen Verarbeitungstemperaturen, wie sie z.B. bei verstärktem Polyamid 66 erreicht werden.

Es wurde nun überraschend gefunden, dass die Verarbeitung der verschiedenen Phosphinate in thermoplastischen Polymeren durch Oberflächenmodifizierung der Phosphinate deutlich verbessert werden kann. Durch geeignete Oberflächenmodifizierung wird die Thermostabilität der Phosphinate von ca. 340 auf über 380°C erhöht. Dadurch kann der Polymerabbau bei Einarbeitung in thermoplastische Polyester wie Polybutylenterephthalat (PBT) erheblich verringert werden. Darüber hinaus werden die durch hohe Verarbeitungstemperaturen bedingten Verfärbungen bei der Einarbeitung in die thermoplastische Polymere wie Polyamid 66 unterdrückt.

Es wurde weiterhin überraschend gefunden, das die flammhemmende Wirkung der Phosphinate durch die Oberflächenmodifizierung nicht negativ beeinträchtigt wird, obwohl organische, also brennbare Materialien zur Oberflächenmodifizierung verwendet werden.

Gegenstand der Erfindung sind somit oberflächen modifizierte Phosphinsäuresalze der Formel (I) und/oder Diphosphinsäuresalze der Formel (II) und/oder deren Polymere, 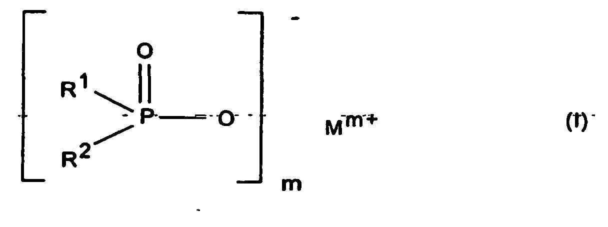 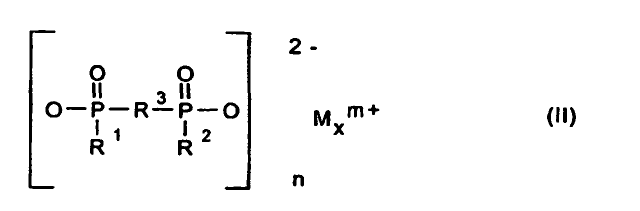 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, dadurch gekennzeichnet, das die Phosphinsäuresalze und/oder Diphosphinsäuresalze oder deren Polymere mit einer Oberflächenschicht aus einem Kunstharz oder einem Wachs umhüllt sind.

Die oberflächenmodifizierten Phosphinsäuresalze der Formel (I) und/oder Diphosphinsäuresalze der Formel (II) und/oder deren Polymere werden nachfolgend auch als "Verbindungen" bezeichnet.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methylphenylen, Ethylphenylen, tert.-Butylphenylen, Methylnaphthylen, Ethylnaphthylen oder tert.-Butylnaphthylen.

Bevorzugt bedeutet R³ auch Phenylmethylen, Phenylethylen, Phenylpropylen oder Phenylbutylen.
Bevorzugt bedeutet M Calcium, Aluminium oder Zink.

Bevorzugt handelt es sich bei dem Kunstharz um ein härtbares Harz.

Bevorzugt handelt es sich bei dem härtbaren Harz um ein Epoxidharz, ein Phenolharz oder ein Melaminharz.

Bevorzugt wird das Kunstharz in Mengen von 0,1 bis 20 Gew.-%, bezogen auf das Phosphinsäuresalz, zugegeben.

Besonders bevorzugt wird das Kunstharz in Mengen von 0,5 bis 10 Gew.-%, insbesondere in Mengen von 1 bis 5 Gew.-%, bezogen auf das Phosphinsäuresalz, zugegeben.

Bevorzugt handelt es sich bei den Wachsen um Kohlenwasserstoffwachse, Esterwachse, oxidierte Polyolefinwachse, oxidierte Kohlenwasserstoffwachse, Amidwachse, Wachssäuren, Wachsseifen und/oder Kombinationen dieser Komponenten.

Bevorzugt werden die Wachse als Pulver, Feinstpulver, Dispersion in Wasser, Dispersion in Lösemittel oder als Dispersionen in Wasser-Lösemittel-Mischungen eingesetzt.

Bevorzugt werden die Wachse in Mengen von 0,5-10 Gew.-%, bevorzugt in Mengen von 1-5 Gew.-%, bezogen auf das Phosphinsäuresalz, zugegeben.

Bevorzugt wird ein als Phlegmatisierungsmittel wirkende, wasseremulgierbare organische Flüssigkeit in Mengen von 0,1 - 5 Gew.-%, bevorzugt in Mengen von 0,1 - 1 Gew.-%, bezogen auf das Phosphinsäuresalz zugegeben.

Bevorzugt handelt es sich bei der wasseremulgierbaren organischen Flüssigkeit um Polyglykole, Phthalate oder aromatische Phosphorsäureester.

Bevorzugt sind bei den Verbindungen weiterhin Melaminphosphat, Dimelaminphosphat, Melaminpyrophosphat, Melaminpolyphosphate, Melampolyphosphate, Melempolyphosphate und/oder Melonpolyphosphate zugegen.

Bevorzugt sind bei den Verbindungen weiterhin Melaminkondensationsprodukte wie Melam, Melem und/oder Melon zugegen.

Bevorzugt sind bei den Verbindungen weiterhin oligomere Ester des Tris(hydroxyethyl)isocyanurats mit aromatischen Polycarbonsäuren, Benzoguanamin, Tris(hydroxyethyl)isocyanurat, Allantoin, Glycoluril, Melamin, Melamincyanurat, Dicyandiamid und/oder Guanidin zugegen.

Bevorzugt sind bei den Verbindungen stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, zugegen.

Bevorzugt sind bei den Verbindungen eine synthetische anorganische Verbindung und/oder ein mineralisches Produkt zugegen.

Bevorzugt handelt es sich bei der synthetischen anorganischen Verbindung und/oder dem mineralischen Produkt m eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt sind Verbindungen, dadurch gekennzeichnet, dass es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

Bevorzugt sind als weitere Komponente Stickstoffverbindungen zugegen.

Bevorzugt handelt es sich bei den Stickstoffverbindungen um solche der Formeln (III) bis (VIII) oder Gemische davon 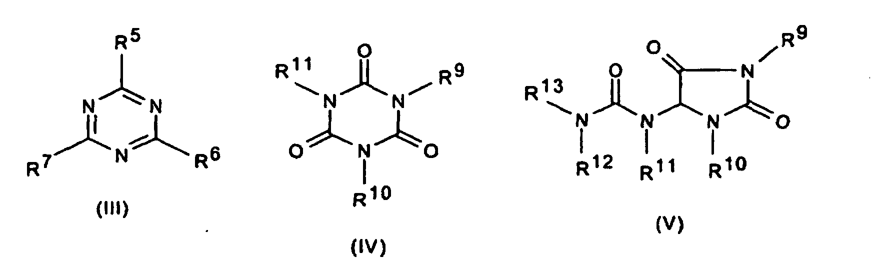 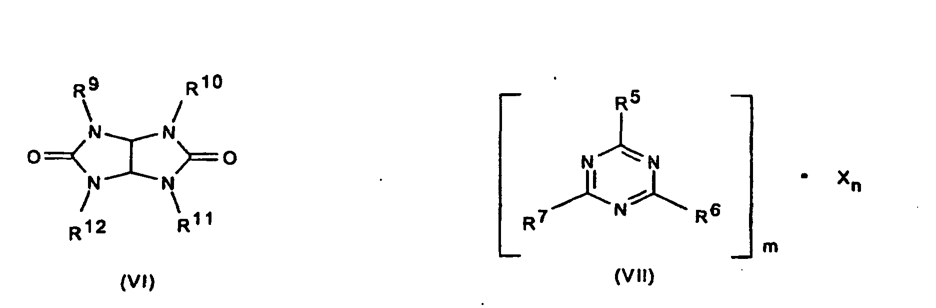 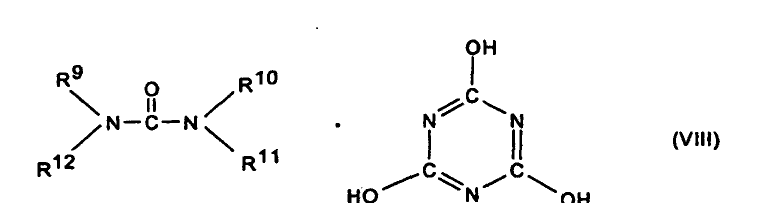 worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten.

Bevorzugt sind auch Carbodiimide zugegen.

Die Erfindung betriff ebenfalls ein Verfahren zur Herstellung von oberflächenmodifizierten Phosphinsäuresalzen, indem man eine wässrige Suspension eines Phosphinates auf einen pH-Wert von 4 bis 9 einstellt, dann eine wässrige Emulsion eines Wachses oder eines Kunstharzes oder eine Lösung des Wachses oder Kunstharzes in einem mit Wasser mischbaren Lösemittel zufügt, während 0,5 bis 3 Stunden bei einer Temperatur von 40 bis 80°C rührt, darauf hin gegebenenfalls eine wässrige Emulsion einer organischen Flüssigkeit zusetzt und während 0,5 bis 3 Stunden bei einer Temperatur von 20 bis 90°C rührt, derart, dass auf über 80 bis 99,9 Masse-Teile Phosphinat 0,1 - 20 % Wachs bzw. Kunstharz und gegebenenfalls 0,1 - 5 % Phlegmatisierungsmittel kommen.

Die Erfindung betrifft auch eine flammfest ausgerüstete Kunststoff-Formmasse, enthaltend die erfindungsgemäße oberflächenmodifizierte Phosphinsäuresalze.

Bevorzugt handelt es sich bei den thermoplastischen Polymeren der flammfest ausgerüstete Kunststoff-Formmasse um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol)

Bevorzugt handelt es sich bei dem Polymeren um Polyamid und/oder Polyester.

In der flammfest ausgerüsteten Kunststoff-Formmasse werden unabhängig voneinander das oberflächenmodifizierte Phosphinsäuresalz in einer Konzentration von 1 bis 30 Gew.-% und die Stickstoffverbindung in einer Konzentration von 0,1 bis 10 Gew.-%, jeweils bezogen auf die Kunststoff-Formmasse, eingesetzt.

Die Erfindung betrifft schließlich auch thermoplastische Polymer-Formkörper, -Filme, -Fäden und -Fasern enthaltend die erfindungsgemäße oberflächenmodifizierte Phosphinsäuresalze.

Bevorzugt handelt e sich bei den thermoplastischen Polymeren der Polymer-Formkörper, -Filme, -Fäden und -Fasern um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS.

Bevorzugt enthalten die Polymer-Formkörper, -Filme, -Fäden und -Fasern
1 bis 30 Gew.-% der oberflächenmodifizierten Phosphinsäuresalze
1 bis 99 Gew.-% thermoplastisches Polymer oder Mischungen derselben
0 bis 5 Gew.-% Additive
0 bis 50 Gew.-% Füllstoff enthalten.

Besonders bevorzugt enthalten die Polymer-Formkörper, -Filme, -Fäden und -Fasern
5 bis 20 Gew.-% der oberflächenmodifizierten Phosphinsäuresalze
48 bis 95 Gew.-% Polymer oder Mischungen derselben
0 bis 2 Gew.-% Additive
0 bis 30 Gew.-% Füllstoff enthalten.

Bevorzugt handelt es sich bei der Oberflächenmodifizierung um eine Beschichtung der Phosphinate mit Wachsen oder Kunstharzen. Besonders bevorzugt sind duroplastische Kunstharze wie ausgehärtete Expoxidharze oder Melaminharze.

Wachse sind natürlich oder künstlich gewonnene Stoffe, die bei 20°C fest und knetbar und über 40°C ohne Zersetzung schmelzend und niedrigviskos sind. Wachse gehen in der Regel zwischen 50 und 90°C, in Ausnahmefällen auch bis zu etwa 200°C, in den schmelzflüssigen, niedrigviskosen Zustand über. Man unterscheidet natürliche Wachse wie Carnaubawachs, chemisch modifizierte Wachse wie Montanesterwachse und synthetische Wachse wie Polyethylenwachse. Bevorzugt sind Kohlenwasserstoffwachse, Esterwachse, oxidierte Polyolefine, oxidierte Kohlenwasserstoffwachse, Amidwachse, Wachssäuren, Wachsseifen oder Kombinationen dieser Komponenten.

Bei der Herstellung der erfindungsgemäßen Phosphinsäuresalze können die Wachse als Pulver, Feinstpulver, Dispersion in Wasser, Dispersion in Lösemittel oder als Dispersionen in Wasser-Lösemittel-Mischungen eingesetzt werden.

Unter Kunstharzen werden nach DIN 55958 synthetische Harze verstanden, die durch Polymerisations-, Polyadditions- oder Polykondensationsreaktion hergestellt werden. Duroplaste ist eine Sammelbezeichnung für alle aus härtbaren Harzen hergestellten Kunststoffe. Zu den Duroplasten gehören Epoxidharze, Polyurethane, Phenolharze, Melaminharze sowie ungesättigte Polyesterharze.

Epoxidharze sind Verbindungen, die durch Polyadditionsreaktion von einer Epoxidharz-Komponente und einer Vernetzungs-(Härter) Komponente hergestellt werden. Als Epoxidharz Komponente werden aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Phthal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet. Als Härter finden Polyamine wie Triethylentetramin, Aminoethylpiperazin und Isophorondiamin, Polyamidoamine, mehrbasige Säure oder deren Anhydride wie z.B. Phthalsäureanhydrid, Hexahydrophthalsäureanhydrid, Methyltetrahydrophthalsäureanhydrid oder Phenole Verwendung. Die Vernetzung kann auch durch Polymerisation unter Verwendung geeigneter Katalysatoren erfolgen.

Melaminharze oder Melamin-Formaldehyd-Harze sind härtbare Kondensationsprodukte aus Melamin und Formaldehyd. Die Aushärtung erfolgt bei höheren Temperaturen (> 100°C) meist in Gegenwart saurer Beschleuniger. Unter Abspaltung von Wasser wird ein Duroplast gebildet.

Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln, wie zuvor beschrieben, verbessert werden.

Bevorzugt wird das efindungsgemäße oberflächenmodifizierte Phosphinat in Kombination mit Stickstoffverbindungen als Flammschutzmittel eingesetzt.

Die Erfindung betrifft auch die Verwendung der erfindungsgemäßen oberflächenmodifizierten Phosphinate zur flammfesten Ausrüstung von thermoplastischen Polymeren. Unter thermoplastischen Polymeren werden laut Hans Domininghaus in "Die Kunststoffe und ihre Eigenschaften", 5. Auflage (1998), S. 14-25, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Bevorzugt werden die erfindungsgemäßen, oberflächenmodifizierte Phosphinate in einer Konzentration von 1 bis 30 Gew.-% und die Stickstoffkomponente in einer Konzentration von 0,1 bis 10 Gew.-%, jeweils bezogen auf die Kunststoff-Formmasse, eingesetzt.

Im folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise: Dimethylphosphinsäure, Ethyl-methylphosphinsäure, Diethylphosphinsäure, Methyl-n-propyl-phosphinsäure, Methan-di(methylphosphinsäure), Benzol-1,4-(dimethyl-phosphinsäure), Methyl-phenylphosphinsäure, Diphenylphosphinsäure.

Die Salze der Phosphinsäuren gemäß der Erfindung können nach bekannten Methoden hergestellt werden, wie sie beispielsweise in der EP 0-699 708 A2 näher beschrieben sind. Die Phosphinsäuren werden dabei beispielsweise in wässriger Lösung mit Metallcarbonaten, Metallhydroxiden oder Metalloxiden umgesetzt.

Zur erfindungsgemäßen Oberflächenmodifizierung der Phosphinsäuresalze können organische Polymere wie Wachse oder Kunstharze verwendet werden. Der Anteil an Wachs oder Polymer, der auf die Oberfläche der Phosphinate aufgetragen wird, liegt zwischen 0,1 und 20 Gew.-%, vorzugsweise 0,5 bis 10 Gew.-% und besonders bevorzugt 1 bis 5 Gew.-%. Die Auftragung kann bevorzugt durch Abscheidung aus wässriger Dispersion erfolgen.

Die Menge des den Polymeren zuzusetzenden Phosphinsäuresalzes kann innerhalb weiter Grenzen variieren. Im allgemeinen verwendet man 1 bis 30 Gew.-%, bezogen auf die Kunststoff-Formmasse. Die optimale Menge hängt von der Natur des Polymeren und vom Typ des eingesetzten Phosphinsäuresalzes selbst ab. Bevorzugt sind 3 bis 25 Gew.-%, insbesondere 5 bis 20 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die Menge der den Polymeren zuzusetzenden Stickstoffverbindung kann innerhalb weiter Grenzen variieren. Im allgemeinen verwendet man 1 bis 30 Gew.-% bezogen auf die Kunststoff-Formmasse. Die optimale Menge hängt von der Natur des Polymeren, der Art des eingesetzten Phosphinsäuresalzes sowie vom Typ der Stickstoffverbindung selbst ab. Bevorzugt sind 3 bis 20, insbesondere 5 bis 15 Gew.-%.

Die flammhemmenden Komponenten können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Den Formmassen können neben der erfindungsgemäßen flammhemmenden Kombination auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-584 567 angegeben.

Die flammwidrigen Kunststoff-Formmassen eignen sich zur Herstellung von Formkörpern, Filmen, Fäden und Fasern, z.B. durch Spritzgießen, Extrudieren oder Verpressen.

### Beispiele

### 1. Eingesetzte Komponenten

### Handelsübliche Polymere (Granulat):

- .Polyamid 66 (PA 66-GV):: ®Durethan AKV 30 (Fa. Bayer AG, D) enthält 30 % Glasfasern.
- Polybutylenterephthalat (PBT-GV):: ®Celanex 2300 GV1/30 (Fa. Ticona GmbH, D) enthält 30 % Glasfasern.

### Phosphinate:

Aluminiumsalz der Diethylphosphinsäure, im folgenden als DEPAL bezeichnet.

Aluminiumsalz der Methyl-Ethylphosphinsäure, im folgenden als MEPAL bezeichnet.

### Oberflächenmodifizierer:

### Epoxidharz:

Beckopox EP 140, Bisphenol-A-bisglycidylester, EP-Wert 0,54 mol/100 g, Polyaminhäter EH 623w, wasserverdünnbarer Aminhärter, Fa. Vianova Resins GmbH, Mainz

### Melaminharz:

Madurit MW 909, teilverethertes Melamin-Formaldehyd-Harz, wasserlösliches Pulver, Fa. Vianova Resins GmbH, Mainz, D

### Wachse:

Agrocer 09: wäßrige Wachsdispersion auf Basis Montanwachs, enthält 23 % Wachs Ceridust 5551, teilverseiftes Esterwachs einer Montansäure, mikronisiert, Teilchengröße 9 µm, Fa. Clariant GmbH, Sulzbach, D

### Stickstoff-Synergisten:

Melapur® MP (Melaminphosphat), Fa. DSM Melapur, NL
Melapur®200 (Melaminpolyphosphat), Fa. DSM Melapur, NL

### 2. Oberflächenmodifikation

### 2.1 Verkapselung mit einem Epoxidharz

### Beispiel 1:

200 g MEPAL werden in 200 g deionisiertem Wasser dispergiert. Unter Rühren werden 5 g Beckopox 122w und 5 g Beckopox EH 623w in 40 ml H₂O emulgiert. Die so erhaltenen Emulsionen werden in das dispergierte MEPAL eingerührt. Dieses Gemisch wird 1 Stunde bei 60°C gerührt und über ein Filterpapier (Weißband) abfiltriert. Der Filterkuchen wird mit ausreichend Wasser gewaschen. Die Trocknung erfolgt bei 120°C im Vakuumtrockenschrank. Es werden 203,7 g Produkt erhalten.

### Beispiel 2:

200 g DEPAL werden in 200 g deionisiertem Wasser dispergiert. Unter Rühren werden 5 g Beckopox 122w und 5 g Beckopox EH 623w in 40 ml H₂O emulgiert.
Die so erhaltenen Emulsionen werden in das dispergierte MEPAL eingerührt. Dieses Gemisch wird 1 Stunde bei 60°C gerührt und über ein Filterpapier (Weißband) abfiltriert. Der Filterkuchen wird mit ausreichend Wasser gewaschen. Die Trocknung erfolgt bei 120°C im Vakuumtrockenschrank. Es werden 203,7 g Produkt erhalten.

### 2.2 Verkapselung mit einem Melaminharz

### Beispiel 3:

200 g MEPAL werden in 200 g deionisiertem Wasser dispergiert.
10 g MADURIT MW 909 werden in 25 g 70°C warmem Wasser emulgiert.
Die Emulsion wird in das dispergierte MEPAL eingerührt. Der pH Wert der Mischung wird mit einer 10 %igen H₂SO₄ auf 4,5 eingestellt. Dieses Gemisch wird 1 Stunde bei 60°C gerührt. Anschließend werden nochmals 10 g MADURIT MW 909 in 25 g 70°C warmem Wasser emulgiert und in das MEPAL eingerührt und nochmals eine Stunde bei 60°C gerührt.
Dieses Gemisch über ein Filterpapier (Weißband) abfiltriert. Der Filterkuchen wird mit ausreichend Wasser gewaschen. Die Trocknung erfolgt bei 120°C im Vakuumtrockenschrank. Es werden 205.3 g Produkt erhalten.

### 2.3 Verkapselung mit einem modifizierten Wachs

### Beispiel 4: mit wässriger Wachsemulsion

200 g MEPAL werden in 250 g deionisiertem Wasser dispergiert.
40 g Agrocer 09 wird in das dispergierte MEPAL eingerührt. Dieses Gemisch wird 1 Stunde bei Raumtemperatur gerührt und anschließend über ein Filterpapier (Weißband) abfiltriert. Der Filterkuchen wird mit ausreichend Wasser gewaschen. Die Trocknung erfolgt bei 120°C im Vakuumtrockenschrank. Es werden 208,4 g Produkt erhalten.

### Beispiel 5: mit mikronisiertem Wachs

200 g MEPAL werden in 250 g deionisiertem Wasser dispergiert.
20 g Ceridust 5551 wird in das dispergierte MEPAL eingerührt. Dieses Gemisch wird 1 Stunde bei Raumtemperatur gerührt und anschließend über ein Filterpapier (Weißband) abfiltriert. Der Filterkuchen wird mit ausreichend Wasser gewaschen.
Die Trocknung erfolgt bei 120°C im Vakuumtrockenschrank. Es werden 210,7 g Produkt erhalten.

### 3. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet und anhand des UL 94-Tests (Underwriter Laboratories) auf Flammwidrigkeit geprüft und klassifiziert.

Die Ölzahl gibt die Menge Öl in g an, die gebraucht wird, um 100 g Feststoff (z.B. Pigment) zu einer zusammenhängenden, kittartigen Masse zu verarbeiten (DIN ISO 787 T5(Feb. 1983)).

Die Thermostabilität wurde mittels Differentialthermoanalyse (DTA) mit einem Netzsch STA 409C gemessen an Luft mit einer Aufheizrate von 5°C/min.

Die Tabelle 1 zeigt die thermische Stabilität von reinem MEPAL und die Erhöhung der Thermostabilität durch die erfindungsgemäße Oberflächenmodifikation. Angegeben ist die extrapolierte Temperatur beginnender Zersetzung. Die Messung der Ölzahl zeigt darüber hinaus die Wirkung der Oberflächenmodifikation. Eine Verringerung der Ölzahl bedeutet eine bessere Benetzung des Pulvers mit Öl und damit eine höhere Polymerverträglichkeit.

**Tabelle 1:**

| Thermostabilität und Ölzahl von oberflächenmodifiziertem MEPAL | | | |
|---|---|---|---|
| Phosphinat | Oberflächen-Modifikation | Ölzahl ml ÖI/100g | Thermostabilität DTA (5°C/min) |
| MEPAL | ohne | 50 | 339°C |
| MEPAL | 1 % Epoxidharz | 49 | 372°C |
| MEPAL | 2 % Epoxidharz | 46 | 376°C |
| MEPAL | 5 % Epoxidharz | 43 | 397°C |
| MEPAL | 5 % Ceridust 5551 | 40 | 391°C |
| MEPAL | 5 % Agrocer 09 | 39 | 391°C |
| MEPAL | 8 % Melaminharz | 42 | 380°C |

Tabelle 2 zeigt Ausprüfungen in PBT. Die SV Zahl wurde als Viskosität einer 1 %igen Lösung in Dichloressigsäure bestimmt.

**Tabelle 2:**

| Einarbeitung von oberflächenmodifiziertem DEPAL in PBT-GV | | | | | | |
|---|---|---|---|---|---|---|
| FSM | | DEPAL | DEPAL | DEPAL | DEPAL | ohne |
| Modifizierung | | ohne | 5% Wachs* | 8% MF Harz** | 5% EP Harz*** | |
| Dosierung | % | 20 | 20 | 20 | 20 | 0 |
| UL 94 1,6 mm Nachbrennzeiten | s | V-1 47 | V-1 81 | V-0 19 | V-0 15 | n.k. verbrannt |
| UL 94 0,8 mm Nachbrennzeiten | s | V-1 53 | V-1 67 | V-1 66 | V-1 57 | n.k. verbrannt |
| SV Zahl | | 644 | 740 | 695 | 782 | 1000 |

| | | | | | | |
|---|---|---|---|---|---|---|
| * Agrocer 09 | | | | | | |
| ** Madurit MW 909 | | | | | | |
| *** Beckopox EP 140/ EH 623w | | | | | | |

Mit 20 % DEPAL wird in glasfaserverstärktem PBT eine V-0 Einstufung erreicht. Bei der Einarbeitung von DEPAL in PBT kommt es zu einem partiellen Polymerabbau, was durch die Verringerung der SV Zahl zum Ausdruck kommt. Wichtige mechanische Eigenschaften wie Reißfestigkeit und Bruchdehnung werden dadurch erheblich verschlechtert. Durch die erfindungsgemäße Oberflächenmodifikation wird der Polymerabbau in PBT begrenzt.

Tabelle 3 zeigt Ausprüfungen in PA 66.

**Tabelle 3:**

| Einarbeitung von oberflächenmodifiziertem DEPAL mit Synergist Melaminpolyphosphat (MPP) in PA 66 GV | | | | | | |
|---|---|---|---|---|---|---|
| FSM | | DEPAL/MPP | DEPAL/MPP | DEPAL/MPP | DEPAL/MPP | ohne |
| Modifizierung | | ohne | 5% Wachs* | 8% MF Harz** | 5% EP Harzz*** | |
| Dosierung | % | 10+5 | 10+5 | 10+5 | 10+5 | 0 |
| UL 94 1, 6 mm Nachbrennzeiten | s | V-0 20 | V-0 21 | V-0 19 | V-0 15 | n.k. verbrannt |
| UL 94 0,8 mm Nachbrennzeiten | s | V-1 51 | V-1 67 | V-1 66 | V-1 57 | n.k. verbrannt |
| Farbe UL Stäbe | | grau-braun | gelblich | braun | gelblich | gelblich |

| | | | | | | |
|---|---|---|---|---|---|---|
| * Agrocer 09 | | | | | | |
| ** Madurit MW 909 | | | | | | |
| *** Beckopox EP 140/ EH 623w | | | | | | |

Mit 10 % DEPAL und 5% Melaminpolyphosphat wird in PA 66 GV eine V-0 Einstufung erreicht. Es wird aber durch die Verarbeitungstemperatur von > 300°C eine deutlich Verfärbung der Probekörper nach grau-braun beobachtet. Durch Oberflächenmodifikation mit Epoxidharz oder Wachs kann die Verfärbung verringert werden.

## Patentansprüche

1. Oberflächenmodifizierte Phosphinsäuresalze der Formel (I) und/oder oberflächenmodifizierte Diphosphinsäuresalze der Formel (II) und/oder deren Polymere, 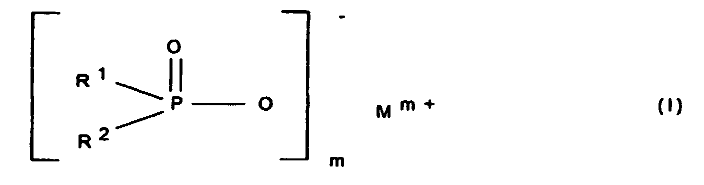 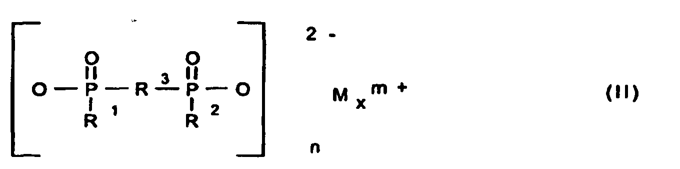 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten, **dadurch gekennzeichnet**, das die Phosphinsäuresalze und/oder Diphosphinsäuresalze oder deren Polymere mit einer Oberflächenschicht aus einem Kunstharz oder einem Wachs umhüllt sind.

2. Verbindungen nach Anspruch 1, **dadurch gekennzeichnet, dass** R¹, R² gleich oder verschieden sind und C₁-C₆-Alkyl, linear oder verzweigt und/oder Phenyl bedeuten.

3. Verbindungen nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Verbindungen nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen bedeutet.

5. Verbindungen nach einem oder mehreren der Ansprüche 1 bis 3, **dadurch gekennzeichnet, dass** R³ Phenylen oder Naphthylen bedeutet.

6. Verbindungen nach einem oder mehreren der Ansprüche 1 bis 3, **dadurch gekennzeichnet, dass** R³ Methylphenylen, Ethylphenylen, tert.-Butylphenylen, Methylnaphthylen, Ethylnaphthylen oder tert.-Butylnaphthylen bedeutet.

7. Verbindungen nach einem oder mehreren der Ansprüche 1 bis 3, **dadurch gekennzeichnet, dass** R³ Phenylmethylen, Phenylethylen, Phenylpropylen oder Phenylbutylen bedeutet.

8. Verbindungen nach einem oder mehreren der Ansprüche 1 bis 7, **dadurch gekennzeichnet, dass** M Calcium, Aluminium oder Zink bedeutet.

9. Verbindungen nach einem oder mehreren der Ansprüche 1 bis 8, **dadurch gekennzeichnet, dass** es sich bei dem Kunstharz um ein härtbares Harz handelt.

10. Verbindungen nach Anspruch 9, **dadurch gekennzeichnet, dass** es sich bei dem härtbaren Harz um ein Epoxidharz, ein Phenolharz oder ein Melaminharz handelt.

11. Verbindungen nach Anspruch 9, **dadurch gekennzeichnet, dass** das Kunstharz in Mengen von 0,1 bis 20 Gew.-%, bezogen auf das Phosphinsäuresalz, zugegeben wird.

12. Verbindungen nach Anspruch 9, **dadurch gekennzeichnet, dass** das Kunstharz in Mengen von 0,5 bis 10 Gew.-%, bevorzugt in Mengen von 1 bis 5 Gew.-%, bezogen auf das Phosphinsäuresalz, zugegeben wird.

13. Verbindungen nach einem oder mehreren der Ansprüche 1 bis 8, **dadurch gekennzeichnet, dass** es sich bei den Wachsen um Kohlenwasserstoffwachse, Esterwachse, oxidierte Polyolefinwachse, oxidierte Kohlenwasserstoffwachse, Amidwachse, Wachssäuren, Wachsseifen und/oder Kombinationen dieser Komponenten handelt.

14. Verbindungen nach einem oder mehreren der Ansprüche 1 bis 8, **dadurch gekennzeichnet, dass** die Wachse als Pulver, Feinstpulver, Dispersion in Wasser, Dispersion in Lösemittel oder als Dispersionen in Wasser-Lösemittel-Mischungen eingesetzt werden.

15. Verbindungen nach einem oder mehreren der Ansprüche 1 bis 8, **dadurch gekennzeichnet, dass** die Wachse in Mengen von 0,5 bis 10 Gew.-%, bevorzugt in Mengen von 1 bis 5 Gew.-%, bezogen auf das Phosphinsäuresalz, zugegeben werden.

16. Verbindungen nach einem oder mehreren der Ansprüche 1 bis 15, **dadurch gekennzeichnet, dass** ein als Phlegmatisierungsmittel wirkende, wasseremulgierbare organische Flüssigkeit in Mengen von 0,1 bis 5 Gew.-%, bevorzugt in Mengen von 0,1 bis 1 Gew.-%, bezogen auf das Phosphinsäuresalz zugegeben wird.

17. Verbindungen nach einem oder mehreren der Ansprüche 1 bis 16, **dadurch gekennzeichnet, dass** es sich bei der wasseremulgierbaren organischen Flüssigkeit um Polyglykole, Phthalate oder aromatische Phosphorsäureester handelt.

18. Verbindungen nach einem oder mehreren der Ansprüche 1 bis 17, **dadurch gekennzeichnet, dass** weiterhin Melaminphosphat, Dimelaminphosphat, Melaminpyrophosphat, Melaminpolyphosphate, Melampolyphosphate, Melempolyphosphate und/oder Melonpolyphosphate zugegen sind.

19. Verbindungen nach einem oder mehreren der Ansprüche 1 bis 18, **dadurch gekennzeichnet, dass** weiterhin Melaminkondensationsprodukte wie Melam, Melem und/oder Melon zugegen sind.

20. Verbindungen nach einem oder mehreren der Ansprüche 1 bis 19, **dadurch gekennzeichnet, dass** weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin zugegen sind.

21. Verbindungen nach einem oder mehreren der Ansprüche 1 bis 20, **dadurch gekennzeichnet, dass** stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, zugegen sind.

22. Verbindungen nach einem oder mehreren der Ansprüche 1 bis 21, **dadurch gekennzeichnet, dass** eine synthetische anorganische Verbindung und/oder ein mineralisches Produkt zugegen ist.

23. Verbindungen nach einem oder mehreren der Ansprüche 1 bis 22, **dadurch gekennzeichnet, dass** es sich bei der synthetischen anorganischen Verbindung und/oder dem mineralischen Produkt m eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

24. Verbindungen nach einem oder mehreren der Ansprüche 1 bis 23, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

25. Verbindungen nach einem oder mehreren der Ansprüche 1 bis 24, **dadurch gekennzeichnet, dass** als weitere Komponente Stickstoffverbindungen zugegen sind.

26. Verbindungen nach einem oder mehreren der Ansprüche 1 bis 25, **dadurch gekennzeichnet, dass** es sich bei den Stickstoffverbindungen um solche der Formeln (III) bis (VIII) oder Gemische davon 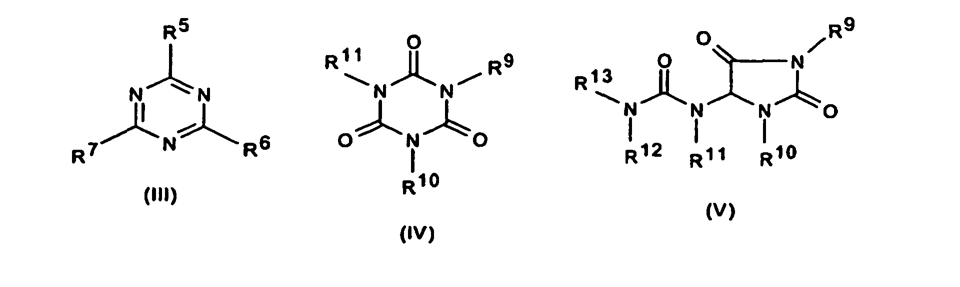 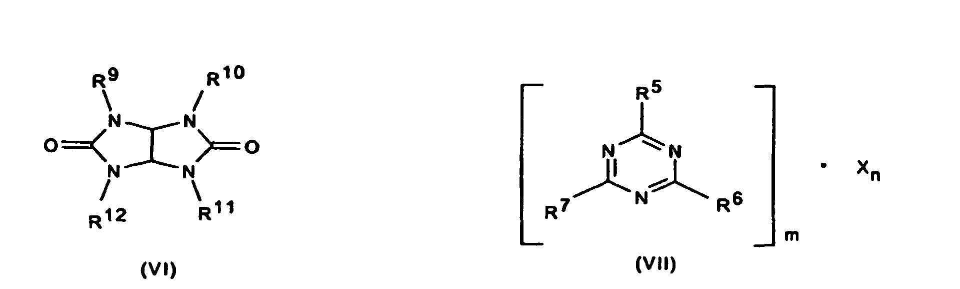 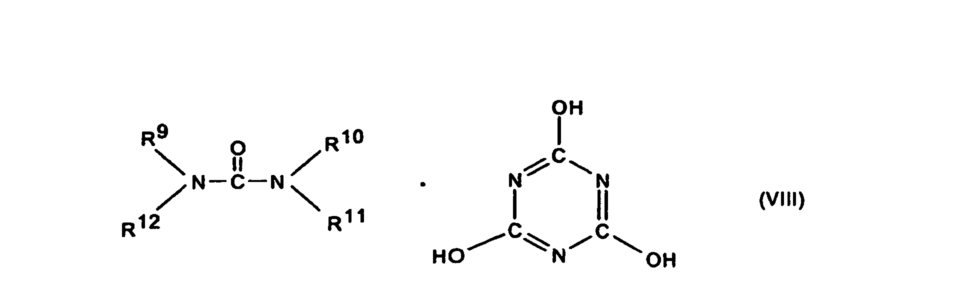 worin
R⁵ bis R⁷Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

27. Verbindungen nach einem oder mehreren der Ansprüche 1 bis 26, **dadurch gekennzeichnet, dass** weiterhin Carbodiimide zugegen sind.

28. Verfahren zur Herstellung von Verbindungen nach einem oder mehreren der Ansprüche 1 bis 27, **dadurch gekennzeichnet, dass** man eine wässrige Suspension eines Phosphinates auf einen pH-Wert von 4 bis 9 einstellt, dann eine wässrige Emulsion eines Wachses oder eines Kunstharzes oder eine Lösung des Wachses oder Kunstharzes in einem mit Wasser mischbaren Lösemittel zufügt, während 0,5 bis 3 Stunden bei einer Temperatur von 40 bis 80°C rührt, darauf hin gegebenenfalls eine wässrige Emulsion einer organischen Flüssigkeit zusetzt und während 0,5 bis 3 Stunden bei einer Temperatur von 20 bis 90°C rührt, derart, dass auf über 80 bis 99,9 Masse-Teile Phosphinat 0,1-20 % Wachs bzw. Kunstharz und gegebenenfalls 0,1-5 % Phlegmatisierungsmittel kommen.

29. Flammfest ausgerüstete Kunststoff-Formmasse, enthaltend eine Verbindung gemäß einem oder mehreren der Ansprüche 1 bis 27.

30. Flammfest ausgerüstete Kunststoff-Formmasse nach Anspruch 29, **dadurch gekennzeichnet, dass** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

31. Flammfest ausgerüstete Kunststoff-Formmasse nach Anspruch 29 oder 30, **dadurch gekennzeichnet, dass** es sich bei dem Polymeren um Polyamid und/oder Polyester handelt.

32. Flammfest ausgerüstete Kunststoff-Formmasse nach gemäß einem oder mehreren der Ansprüche 29 bis 31, **dadurch gekennzeichnet, dass** unabhängig voneinander das oberflächenmodifizierte Phosphinsäuresalz in einer Konzentration von 1 bis 30 Gew.-% und die Stickstoffverbindung in einer Konzentration von 0,1 bis 10 Gew.-%, jeweils bezogen auf die Kunststoff-Formmasse, eingesetzt wird.

33. Thermoplastische Polymer-Formkörper, -Filme, -Fäden und -Fasern enthaltend Verbindungen gemäß einem oder mehreren der Ansprüche 1 bis 27.

34. Polymer-Formkörper, -Filme, -Fäden und -Fasern nach Anspruch 33, **dadurch gekennzeichnet, dass** es sich bei dem bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

35. Polymer-Formkörper, -Filme, -Fäden und -Fasern nach Anspruch 33 oder 34, **dadurch gekennzeichnet, dass** sie
1 bis 30 Gew.-% einer Verbindung der Ansprüche 1 bis 27
1 bis 99 Gew.-% thermoplastisches Polymer oder Mischungen derselben
0 bis 5 Gew.-% Additive
0 bis 50 Gew.-% Füllstoff enthalten.

36. Polymer-Formkörper, -Filme, -Fäden und -Fasern nach einem oder mehreren der Ansprüche 33 bis 35, **dadurch gekennzeichnet, dass** sie
5 bis 20 Gew.-% einer Verbindung der Ansprüche 1 bis 27
48 bis 95 Gew.-% Polymer oder Mischungen derselben
0 bis 2 Gew.-% Additive
0 bis 30 Gew.-% Füllstoff enthalten.

## Claims

1. A surface-modified phosphinic salt of the formula (I) and/or a surface-modified diphosphinic salt of the formula (II) and/or polymers of these, 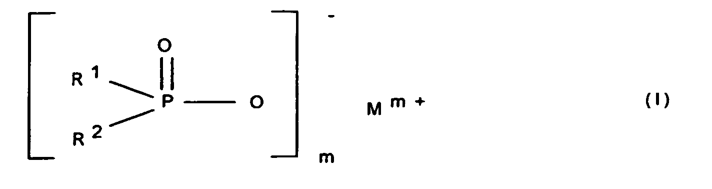 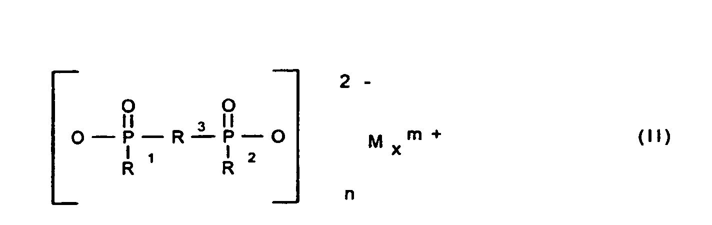 where
R¹ and R² are identical or different and are C₁-C₆-alkyl, linear or branched, and/or aryl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is from 1 to 4;
n is from 1 to 4;
x is from 1 to 4,
wherein the phosphinic salt and/or diphosphinic salt, or their polymers, have been encapsulated with a surface layer composed of a synthetic resin or a wax.

2. The compound as claimed in claim 1, wherein R¹ and R² are identical or different and are C₁-C₆-alkyl, linear or branched, and/or phenyl.

3. The compound as claimed in claim 1 or 2, wherein R¹ and R² are identical or different and are methyl, ethyl, n-propyl, isopropyl, n-butyl, tert-butyl, n-pentyl and/or phenyl.

4. The compound as claimed in one or more of claims 1 to 3, wherein R³ is methylene, ethylene, n-propylene, isopropylene, n-butylene, tert-butylene, n-pentylene, n-octylene or n-dodecylene.

5. The compound as claimed in one or more of claims 1 to 3, wherein R³ is phenylene or naphthylene.

6. The compound as claimed in one or more of claims 1 to 3, wherein R³ is methylphenylene, ethylphenylene, tert-butylphenylene, methylnaphthylene, ethylnaphthylene, or tert-butylnaphthylene.

7. The compound as claimed in one or more of claims 1 to 3, wherein R³ is phenylmethylene, phenylethylene, phenylpropylene, or phenylbutylene.

8. The compound as claimed in one or more of claims 1 to 7, wherein M is calcium, aluminum, or zinc.

9. The compound as claimed in one or more of claims 1 to 8, wherein the synthetic resin comprises a curable resin.

10. The compound as claimed in claim 9, wherein the curable resin comprises an epoxy resin, a phenolic resin, or a melamine resin.

11. The compound as claimed in claim 9, wherein the amounts added of the synthetic resin are from 0.1 to 20% by weight, based on the phosphinic salt.

12. The compound as claimed in claim 9, wherein the amounts added of the synthetic resin are from 0.5 to 10% by weight, preferably from 1 to 5% by weight, based on the phosphinic salt.

13. The compound as claimed in one or more of claims 1 to 8, wherein the waxes comprise hydrocarbon waxes, ester waxes, oxidized polyolefin waxes, oxidized hydrocarbon waxes, amide waxes, wax acids, wax soaps and/or a combination of these components.

14. The compound as claimed in one or more of claims 1 to 8, wherein the waxes are used in the form of powder, micropowder, dispersion in water, dispersion in solvent, or in the form of dispersions in water/solvent mixtures.

15. The compound as claimed in one or more of claims 1 to 8, wherein the amounts added of the waxes are from 0.5 to 10% by weight, preferably from 1 to 5% by weight, based on the phosphinic salt.

16. The compound as claimed in one or more of claims 1 to 15, wherein amounts of from 0.1 to 5% by weight, preferably from 0.1 to 1 % by weight, based on the phosphinic salt, of a water-emulsifiable organic liquid acting as phlegmatizer are added.

17. The compound as claimed in one or more of claims 1 to 16, wherein the water-emulsifiable organic liquid comprises polyglycols, phthalates, or aromatic phosphoric esters.

18. The compound as claimed in one or more of claims 1 to 17, wherein melamine phosphate, dimelamine phosphate, melamine pyrophosphate, melamine polyphosphates, melam polyphosphates, melem polyphosphates and/or melon polyphosphates are also present.

19. The compound as claimed in one or more claims 1 to 18, wherein melamine condensation products, such as melam, melem, and/or melon, are also present.

20. The compound as claimed in one or more of claims 1 to 19, wherein oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide, and/or guanidine are also present.

21. The compound as claimed in one or more of claims 1 to 20, wherein nitrogen-containing phosphates of the formulae (NH₄)_{y}H_{3-y}PO₄ and, respectively, (NH₄PO₃)_{z}, are present, where y is from 1 to 3 and z is from 1 to 10 000.

22. The compound as claimed in one or more of claims 1 to 21, wherein a synthetic inorganic compound and/or a mineral product is present.

23. The compound as claimed in one or more of claims 1 to 22, wherein the synthetic inorganic compound and/or the mineral product m comprises an oxygen compound of silicon, magnesium compounds, metal carbonates of metals of the second main group of the periodic table, red phosphorus, or comprises zinc compounds or aluminum compounds.

24. The compound as claimed in one or more of claims 1 to 23, wherein the oxygen compounds of silicon comprise salts and esters of orthosilicic acid and condensation products thereof, or comprise silicates, zeolites, and silicas, or comprise glass powder, glass/ceramic powder, or ceramic powder; the magnesium compounds comprise magnesium hydroxide, hydrotalcites, magnesium carbonates or magnesium calcium carbonates; the zinc compounds comprise zinc oxide, zinc stannate, zinc hydroxystannate, zinc phosphate, zinc borate, or zinc sulfides; the aluminum compounds compnse aluminum hydroxide or aluminum phosphate.

25. The compound as claimed in one or more of claims 1 to 24, wherein nitrogen compounds are present as a further component.

26. The compound as claimed in one or more of claims 1 to 25, wherein the nitrogen compounds comprise those of the formulae (III) to (VIII) or mixtures thereof 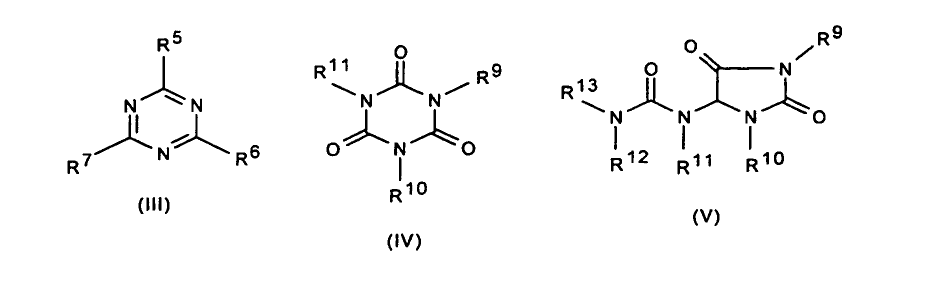 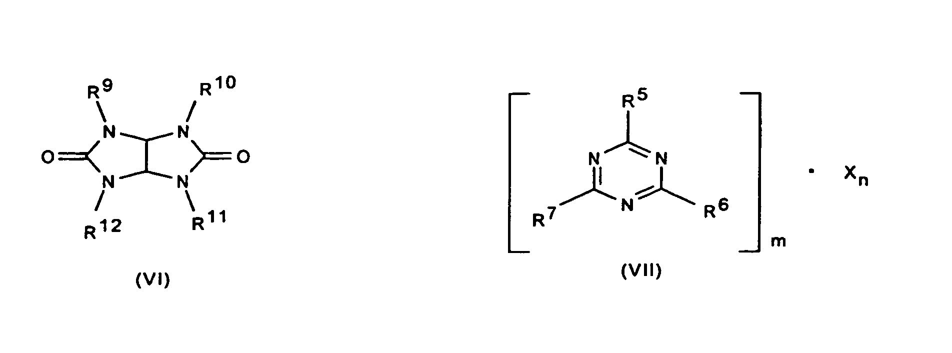 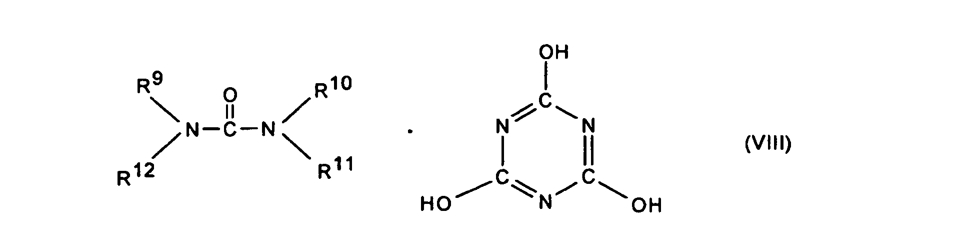 where
R⁵ to R⁷ are hydrogen, C₁-C₈-alkyl, or C₅-C₁₆-cycloalkyl or -alkylcycloalkyl, unsubstituted or substituted with a hydroxy function or with a C₁-C₄-hydroxyalkyl function, or are C₂-C₈-alkenyl, C₁-C₈-alkoxy, -acyl, or - acyloxy, or C₆-C₁₂-aryl or -arylalkyl, or -OR⁸ or -N(R⁸)R⁹ , or else N-alicyclic systems or N-aromatic systems,
R⁸ is hydrogen, C₁-C₈-alkyl, C₅-C₁₆-cycloalkyl or -alkylcycloalkyl, unsubstituted or substituted with a hydroxy function or with a C₁-C₄-hydroxyalkyl function, or is C₂-C₈-alkenyl, C₁-C₈-alkoxy, -acyl, or -acyloxy, or C₆-C₁₂-aryl or -arylalkyl,
R⁹ to R¹³ are the groups of R⁸, or else -O-R⁸,
m and n, independently of one another, are 1, 2, 3, or 4,
X is acids which can form adducts with triazine compounds (III).

27. The compound as claimed in one or more of claims 1 to 26, wherein carbodiimides are also present.

28. A process for preparing compounds as claimed in one or more of claims 1 to 27, which comprises adjusting the pH of an aqueous suspension of a phosphinate to 4-9, then adding an aqueous emulsion of a wax or of a synthetic resin, or a solution of the wax or synthetic resin in a water-miscible solvent, stirring for from 0.5 to 3 hours at a temperature of from 40 to 80°C, and then, where appropriate, adding an aqueous emulsion of an organic liquid, and stirring for from 0.5 to 3 hours at a temperature of from 20 to 90°C, in such a way that from 0.1-20% of wax and, respectively, synthetic resin and, where appropriate, from 0.1 to 5% of phlegmatizer are applied to 80-99.9 parts by weight of phosphinate.

29. A flame-retardant plastics molding composition comprising a compound as claimed in one or more of claims 1 to 27.

30. The flame-retardant plastics molding composition as claimed in claim 29, wherein the thermoplastic polymers comprise HI (high-impact) polystyrene, polyphenylene ethers, polyamides, polyesters, polycarbonates, or blends or polyblends of the type represented by ABS (acrylonitrile-butadiene-styrene), or PC/ABS (polycarbonate/acrylonitrile-butadiene).

31. The flame-retardant plastics molding composition as claimed in claim 29 or 30, wherein the polymer comprises polyamide and/or polyester.

32. The flame-retardant plastics molding composition as claimed in one or more of claims 29 to 31, wherein, independently of one another, the surface-modified phosphinic salt is used at a concentration of from 1 to 30% by weight, and the nitrogen compound is used at a concentration of from 0.1 to 10% by weight, based in each case on the plastics molding composition.

33. A thermoplastic polymer molding, a thermoplasic polymer film, a thermoplastic polymer filament, or a thermoplastic polymer fiber, comprising a compound as claimed in one or more of claims 1 to 27.

34. A polymer molding, a polymer film, a polymer filament, or a polymer fiber, as claimed in claim 33, wherein the thermoplastic polymer comprises HI (high-impact) polystyrene, polyphenylene ethers, polyamides, polyesters, polycarbonates, or blends or polyblends of the type represented by ABS (acrylonitrile-butadiene-styrene), or PC/ABS (polycarbonate/acrylonitrile-butadiene-styrene), polyamide, polyester, and/or ABS.

35. The polymer molding, polymer film, polymer filament, or polymer fiber as claimed in claim 33 or 34, which comprises
from 1 to 30% by weight of a compound of claims 1 to 27
from 1 to 99% by weight of thermoplastic polymer, or a mixture of these from 0 to 5% by weight of additives
from 0 to 50% by weight of filler.

36. The polymer molding, polymer film, polymer filament, or polymer fiber as claimed in one or more of claims 33 to 35, which comprises
from 5 to 20% by weight of a compound of claims 1 to 27
from 48 to 95% by weight of polymer, or a mixture of these
from 0 to 2% by weight of additives
from 0 to 30% by weight of filler.

## Revendications

1. Sels d'acide phosphinique de formule (I), modifiés en surface, ou sels d'acide diphosphinique de formule (II) modifiés en surface, et/ou leurs polymères 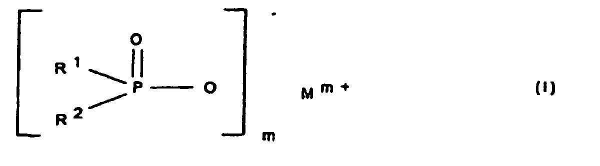 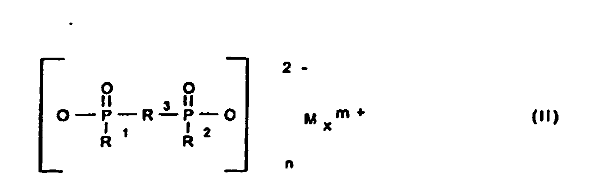 dans lesquels
R¹ et R² sont identiques ou différents et représentent des groupes alkyle en C₁-C₆ à chaîne droite ou ramifiée, et/ou aryle ;
R³ est un groupe alkylène en C₁-C₁₀ à chaîne droite ou ramifiée, ou arylène, alkylarylène ou arylalkylène en C₆-C₁₀ ;
M est Mg, Ca, Al, Sb, Sn, Ge, Ti, Zn, Fe, Zr, Ce, Bi, Sr, Mn, Li, Na, K et/ou une base azotée protonée ;
m vaut 1 à 4 ;
n vaut 1 à 4 ;
x vaut 1 à 4
**caractérisés en ce que** les sels d'acide phosphinique et/ou les sels d'acide diphosphinique ou leurs polymères sont enveloppés d'une couche superficielle constituée d'une résine synthétique ou d'une cire.

2. Composés selon la revendication 1, **caractérisés en ce que** R¹ et R² sont identiques ou différents et représentent des groupes alkyle en C₁-C₆ à chaîne droite ou ramifiée et/ou phényle.

3. Composés selon la revendication 1 ou 2, **caractérisés en ce que** R¹ et R² sont identiques ou différents et représentent les groupes méthyle, éthyle, n-propyle, isopropyle, n-butyle, tert-butyle, n-pentyle et/ou phényle.

4. Composés selon l'une ou plusieurs des revendications 1 à 3, **caractérisés en ce que** R³ est le radical méthylène, éthylène, n-propylène, isopropylène, n-butylène, tert-butylène, n-pentylène, n-octylène ou n-dodécylène.

5. Composés selon l'une ou plusieurs des revendications 1 à 3, **caractérisés en ce que** R³ est le radical phénylène ou naphtylène.

6. Composés selon l'une ou plusieurs des revendications 1 à 3, **caractérisés en ce que** R³ est le radical méthylphénylène, éthylphénylène, tert-butylphénylène, méthylnaphtylène, éthylnaphtylène ou tert-butylnaphtylène.

7. Composés selon l'une ou plusieurs des revendications 1 à 3, **caractérisés en ce que** R³ est le radical phénylméthylène, phényléthylène, phénylpropylène ou phénylbutylène.

8. Composés selon l'une ou plusieurs des revendications 1 à 7, **caractérisés en ce que** M est le calcium, l'aluminium ou le zinc.

9. Composés selon l'une ou plusieurs des revendications 1 à 8, **caractérisés en ce que**, pour ce qui concerne la résine synthétique, il s'agit d'une résine durcissable.

10. Composés selon la revendication 9, **caractérisés en ce que**, pour ce qui concerne la résine durcissable, il s'agit d'une résine époxyde, d'une résine phénolique ou une résine de mélamine.

11. Composés selon la revendication 9, **caractérisés en ce que** la résine synthétique est ajoutée en des quantités de 0,1 à 20 % en poids par rapport au sel d'acide phosphinique.

12. Composés selon la revendication 9, **caractérisés en ce que** la résine synthétique est ajoutée en des quantités de 0,5 à 10 % en poids, de préférence en des quantités de 1 à 5 % en poids par rapport au sel d'acide phosphinique.

13. Composés selon l'une ou plusieurs des revendications 1 à 8, **caractérisés en ce que**, pour ce qui concerne les cires, il s'agit de cires hydrocarbonées, de cires d'esters, de cires de polyoléfine oxydées, de cires hydrocarbonées oxydées, de cires d'amides, d'acides aliphatiques, de savons de cire et/ou de combinaisons de ces composants.

14. Composés selon l'une ou plusieurs des revendications 1 à 8, **caractérisés en ce que** les cires sont utilisées sous forme d'une poudre, d'une poudre à très fine granulométrie, d'une dispersion dans l'eau, d'une dispersion dans un solvant, ou sous forme de dispersions dans des mélanges d'eau et de solvant.

15. Composés selon l'une ou plusieurs des sont ajoutées en des quantités de 0,5 à 10 % en poids, de préférence en des quantités de 1 à 5 % en poids par rapport au sel d'acide phosphinique.

16. Composés selon l'une ou plusieurs des revendications 1 à 15, **caractérisés en ce qu'**on ajoute un liquide organique émulsionnable à l'eau, jouant le rôle d'un flegmatisant, en des quantités de 0,1 à 5 % en poids, de préférence en des quantités de 0,1 à 1 % en poids par rapport au sel d'acide phosphinique.

17. Composés selon l'une ou plusieurs des revendications 1 à 16, **caractérisés en ce que**, pour ce qui concerne le liquide organique émulsionnable à l'eau, il s'agit de polyglycols, de phtalates ou d'esters aromatiques d'acide phosphorique.

18. Composés selon l'une ou plusieurs des revendications 1 à 17, **caractérisés en ce que** sont en outre présents du phosphate de mélamine, du phosphate de dimélamine, du pyrophosphate de mélamine, des polyphosphates de mélamine, des polyphosphates de mélam, des polyphosphates de mélem et/ou des polyphosphates de mélon.

19. Composés selon l'une ou plusieurs des revendications 1 à 18, **caractérisés en ce que** sont en outre présents des produits de condensation de la mélamine tels que le mélam, le mélem et/ou le mélon.

20. Composés selon l'une ou plusieurs des revendications 1 à 19, **caractérisés en ce que** sont en outre présents des esters oligomères de l'isocyanurate de tris (hydroxyéthyle) avec des acides polycarboxyliques aromatiques, la benzoguanamine, l'isocyanurate de tris(hydroxyéthyle), l'allantoine, le glycourile, la mélamine, le cyanurate de mélamine, le dicyanodiamide et/ou la guanidine.

21. Composés selon l'une ou plusieurs des revendications 1 à 20, **caractérisés en ce que** sont présents des phosphates azotés ayant les formules (NH₄)_{y}H_{3-y}PO₄ ou (NH₄PO₃)_{z}, y valant 1 à 3 et z valant 1 à 10 000.

22. Composés selon l'une ou plusieurs des revendications 1 à 21, **caractérisés en ce qu'**est présent un composé inorganique synthétique et/ou un produit minéral.

23. Composés selon l'une ou plusieurs des revendications 1 à 22, **caractérisés en ce que**, pour ce qui concerne le composé inorganique synthétique et/ou le produit minéral, il s'agit d'un composé oxygéné du silicium, de composés du magnésium, de carbonates métalliques de métaux du deuxième groupe principal du Tableau Périodique, de phosphore rouge, de composés du zinc ou de l'aluminium.

24. Composés selon l'une ou plusieurs des revendications 1 à 23, **caractérisés en ce que**, pour ce qui concerne les composés oxygénés du silicium, il s'agit de sels et d'esters de l'acide orthosilicique et de leurs produits de condensation, de silicates, de zéolites et d'acides siliciques, de poudres de verre, de vitrocéramique ou de céramique ; pour ce qui concerne les composés du magnésium, il s'agit de l'hydroxyde du magnésium, des hydrotalcites, des carbonates de magnésium ou des carbonates de magnésium et de calcium ; pour ce qui concerne les composés du zinc, il s'agit de l'oxyde, du stannate, de l'hydroxystannate, du phosphate, du stannate, de l'hydroxystannate, du phosphate, du borate ou des sulfures de zinc ; pour ce qui concerne les composés de l'aluminium, il s'agit de l'hydroxyde ou du phosphate d'aluminium.

25. Composés selon l'une ou plusieurs des revendications 1 à 24, **caractérisés en ce que** sont présents des composés azotés en tant qu'autres composants.

26. Composés selon l'une ou plusieurs des revendications 1 à 25, **caractérisés en ce que**, pour ce qui concerne les composés azotés, il s'agit de ceux qui ont les formules (III) à (VIII), ou de mélanges de ces derniers 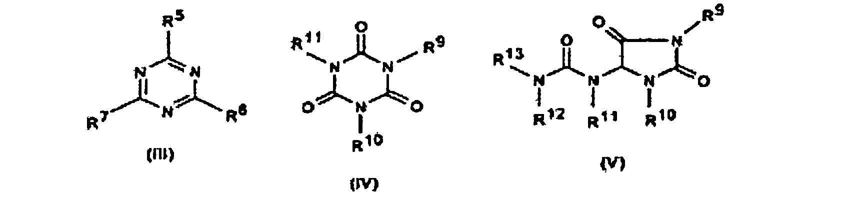 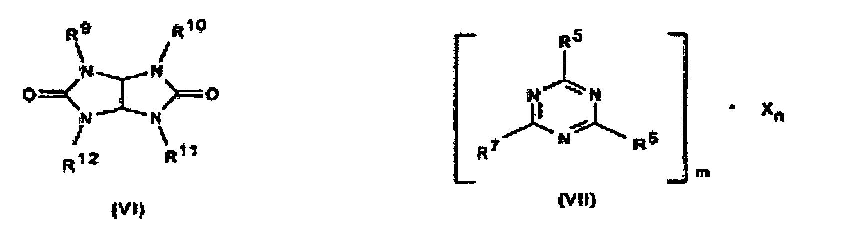 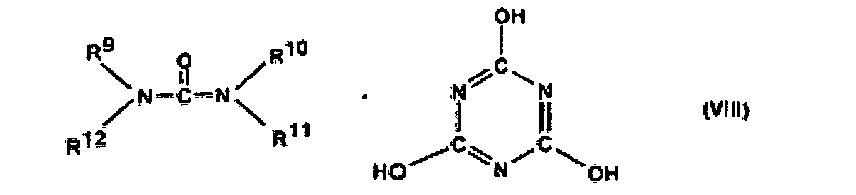 dans lesquels
R⁵ à R⁷ sont des atomes d'hydrogène, des groupes fonction hydroxyalkyle en C₁-C₄, alcényle en C₂-C₈, alcoxy, acyle, acyloxy en C₁-C₈, aryle ou arylalkyle en C₆-C₁₂, -OR⁸ ou -N(R⁸)R⁹, ainsi que des radicaux N-alicycliques ou N-aromatiques,
R⁸ est un atome d'hydrogène ou un groupe alkyle en C₁-C₈, cycloalkyle ou alkylcycloalkyle en C₅-C₁₆, éventuellement substitué par une fonction hydroxy ou une fonction hydroxyalkyle en C₁-C₄, alcényle en C₂-C₈, alcoxy, acyle, acyloxy en C₁-C₈, ou aryle ou arylalkyle en C₆-C₁₂,
R⁹ à R¹³ représentent les mêmes groupes que R⁸, ainsi que -O-R⁸,
m et n représentent chacun indépendamment de l'autre 1, 2, 3 ou 4,
X représente des acides, qui peuvent former des adduits avec les triazines (III).

27. Composés selon l'une ou plusieurs des revendications 1 à 26, **caractérisés en ce que** sont en outre présents des carbodiimides.

28. Procédé de préparation de composés selon l'une ou plusieurs des revendications 1 à 27, **caractérisé en ce qu'**on ajuste une suspension aqueuse d'un phosphinate à un pH de 4 à 9, puis on ajoute une émulsion aqueuse d'une cire ou d'une résine synthétique, ou une solution de la cire ou de la résine synthétique dans un solvant miscible à l'eau, on agite pendant 0,5 à 3 heures à une température de 40 à 80°C, puis on ajoute éventuellement une émulsion aqueuse d'un liquide organique, et on agite pendant 0,5 à 3 heures à une température de 20 à 90°C de façon à avoir, pour une quantité de phosphinate supérieure à 80 et allant jusqu'à 99,9 parties en masse, 0,1 à 20 % de cire ou de résine synthétique, et éventuellement 0,1 à 5 % d'un flegmatisant.

29. Mélange à mouler de matière plastique à finissage ininflammable, contenant un composé selon l'une ou plusieurs des revendications 1 à 27.

30. Mélange à mouler de matière plastique à finissage ininflammable selon la revendication 29, **caractérisé en ce que**, pour ce qui concerne les polymères thermoplastiques, il s'agit de polystyrène HI (High-Impact, à grande résistance au choc), de polyphénylène-éther, de polyamides, de polyesters, de polycarbonates et de mélanges ou de mélanges polymères de type ABS (acrylonitrile-butadiène-styrène) ou PC/ABS (polycarbonate/ acrylonitrile-butadiène-styrène).

31. Mélange à mouler de matière plastique à finissage ininflammable selon la revendication 29 ou 30, **caractérisé en ce que**, pour ce qui concerne le polymère, il s'agit d'un polyamide et/ou d'un polyester.

32. Mélange à mouler de matière plastique à finissage ininflammable selon l'une ou plusieurs des revendications 29 à 31, **caractérisé en ce qu'**on utilise, indépendamment l'un de l'autre, le sel d'acide phosphinique modifié en surface à une concentration de 1 à 30 % en poids et le composé azoté à une concentration de 0,1 à 10 % en poids, dans tous les cas par rapport au mélange à mouler de matière plastique.

33. Mélanges à mouler, films, fils et fibres d'un polymère thermoplastique, contenant des composés selon l'une ou plusieurs des revendications 1 à 27.

34. Mélanges à mouler, films, fils et fibres polymères selon la revendication 33, **caractérisés en ce que**, pour ce qui concerne les polymères thermoplastiques, il s'agit de polystyrène HI (High-Impact, à grande résistance au choc), de polyphénylène-éther, de polyamides, de polyesters, de polycarbonates et de mélanges ou mélanges polymères de type ABS (acrylonitrile-butadiène-styrène) ou PC/ABS (polycarbonate/acrylonitrile-butadiène-styrène), de polyamide, de polyester et/ou d'ABS.

35. Mélanges à mouler, films, fils et fibres polymères selon la revendication 33 ou 34, **caractérisés en ce qu'**ils contiennent 1 à 30 % en poids d'un composé selon les revendications 1 à 27, 1 à 99 % en poids d'un polymère thermoplastique ou de mélanges de ce dernier, 0 à 5 % en poids d'additifs et 0 à 50 % en poids de matières de charge.

36. Mélanges à mouler, films, fils et fibres polymères selon l'une ou plusieurs des revendications 33 à 35, **caractérisés en ce qu'**ils contiennent 5 à 20 % en poids d'un composé selon les revendications 1 à 27, 48 à 95 % en poids d'un polymère ou de mélange de ce dernier, 0 à 2 % en poids d'additifs et 0 à 30 % en poids de matières de charge.
